# FASCICULE DE BREVET EUROPEEN

(11) **EP 1 523 423 B1**
(45) Date de publication et mention de la délivrance du brevet: **05.04.2006**
(21) Numéro de dépôt: 03765134.6
(22) Date de dépôt: 26.06.2003
(51) Int. Cl.: B60J 7/20

(54) **DISPOSITIF ADAPTE A FACILITER L'INTRODUCTION D'OBJETS SOUS UN TOIT REPLIE DANS UN COFFRE DE VEHICULE AUTOMOBILE**
ZUR ERLEICHTERUNG DES EINFÜHRENS VON OBJEKTEN UNTER EINEM FALTDACH IM KOFFERRAUM EINES KRAFTFAHRZEUGS VERWENDETE VORRICHTUNG
DEVICE USED TO FACILITATE THE INSERTION OF OBJECTS UNDER A FOLDED ROOF IN THE BOOT OF A MOTOR VEHICLE

(30) Priorité: 19.07.2002 FR 0209217
(43) Date de publication de la demande: 20.04.2005
(73) Titulaire: Société Européenne de Brevets Automobiles, 75011 Paris (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirières (FR)
(74) Mandataire: de Roquemaurel, Bruno
(86) Numéro de dépôt international: PCT/FR2003/001981
(87) Numéro de publication internationale: WO 2004/009387

(56) Documents cités:
- EP-A- 0 958 955
- DE-A- 19 723 328
- US-B1- 6 312 042

## Description

La présente demande concerne un dispositif adapté à faciliter l'introduction d'objets sous un toit qui est replié dans un coffre de véhicule automobile.

On connaît du document US 6 312 042 un dispositif adapté à faciliter l'introduction d'objets sous un toit plié dans un coffre arrière de véhicule automobile, du type selon lequel le toit est mobile entre une position déployée dans laquelle il recouvre l'habitacle du véhicule, et une position pliée rangée dans laquelle le toit est rangé et escamoté dans le coffre, et comporte un élément arrière de toit et au moins un élément supplémentaire de toit qui est disposé en avant de l'élément arrière de toit quand le toit est en position déployée, et au-dessus de l'élément arrière de toit quand le toit est en position pliée, l'élément arrière de toit comportant un doigt de guidage adapté à coulisser le long d'un rail de guidage qui est solidaire de la carrosserie du véhicule et qui comprend une section de rangement adaptée à guider le toit entre sa position déployée et une position pliée rangée, et une section de soulèvement prolongeant la section de rangement et adaptée à guider le toit plié entre sa position pliée rangée et une position pliée surélevée dans laquelle le toit plié fait au moins partiellement saillie hors du coffre, le capot du coffre étant en position ouverte, le dispositif comprenant un organe de soulèvement monté de façon mobile entre une position basse et une position haute, et adapté à entraîner le doigt de guidage le long de la section de soulèvement.

Un tel dispositif, décrit aussi dans le demande de brevet français enregistrée sous le numéro 02 02 484, permet de rendre accessible la zone du coffre arrière située sous le toit plié. En effet, cette zone pouvant recevoir des bagages est difficilement accessible, le bord arrière de l'élément de toit arrière quand il est plié dans le coffre étant trop proche du bord arrière de l'ouverture d'accès au coffre. Le dispositif permet de soulever l'ensemble du toit plié et ainsi d'augmenter l'accès à cette zone. Bien évidemment, le soulèvement du toit plié ne peut se faire que lorsque le capot du coffre arrière est ouvert.

Un tel dispositif a l'inconvénient majeur de laisser les éléments supplémentaires de toit avec un certain degré de liberté de mouvement par rapport à l'élément arrière de toit, les moyens permettant l'articulation des éléments de toit entre eux ne conférant pas une rigidité suffisante au toit replié, ce qui peut entraîner, lors du soulèvement du toit plié, un décalage des éléments supplémentaires de toit et leur mise en porte-à-faux.

L'invention a pour objet de résoudre le problème précité en offrant un dispositif évitant tout risque de décalage des éléments supplémentaires de toit (et donc de porte-à-faux) quand le toit plié est soulevé.

Selon l'invention, un organe de verrouillage est monté sur l'organe de soulèvement de façon mobile entre une position de déverrouillage et une position de verrouillage dans laquelle l'organe de verrouillage est adapté à supporter chaque élément supplémentaire de toit et à immobiliser chaque élément supplémentaire de toit par rapport à l'élément arrière de toit, quand le toit est entraîné entre sa position pliée rangée et sa position pliée surélevée.

Une telle invention permet de rendre accessible la zone du coffre arrière située sous le toit plié sans que les éléments supplémentaires de toit ne se décalent et soient en porte-à-faux quand le toit plié est soulevé.

D'autres particularités et avantages de la présente invention apparaîtront dans la description qui va suivre.

Aux dessins donnés à titre d'exemple non limitatif,
- la figure 1 est une vue en coupe schématique selon la direction longitudinale d'un véhicule représentant un toit pliable en position déployée ;
- la figure 2 est une vue similaire à la figure 1, le toit étant en cours de rangement dans le coffre arrière ;
- la figure 3 est une vue agrandie similaire aux figures 1 et 2, le toit étant en position pliée rangée dans le coffre arrière, l'organe de soulèvement n'étant pas représenté ;
- la figure 4 est une vue similaire à la figure 3 représentant le rail de guidage et l'organe de soulèvement selon l'invention, les éléments de toit n'étant pas représentés ;
- la figure 5 est une vue en coupe selon la droite V-V de la figure 4 ;
- la figure 6 est une vue de dessus en coupe des moyens de commande en position de repos selon la droite VI-VI de la figure 8 ;
- la figure 7 est une vue similaire à la figure 6 les moyens de commande étant en position de blocage ;
- la figure 8 est une vue similaire aux figures 3 et 4, les éléments de toit et l'organe de soulèvement étant représentés, le toit étant en position pliée rangée et l'organe de verrouillage étant en position de déverrouillage ;
- la figure 9 est une vue similaire à la figure 8, le toit étant en position pliée rangée et l'organe de verrouillage étant en position de verrouillage ;
- la figure 10 est une vue similaire aux figures 8 et 9, le toit étant en position pliée surélevée et l'organe de verrouillage étant en position de verrouillage ; et
- la figure 11 est une vue en coupe selon la droite XI-XI de la figure 8.
- la figure 12 est une vue en coupe similaire à la figure 8 d'un second mode de réalisation de la présente invention ;
- la figure 13 est une vue en coupe similaire aux figures 8 et 12 d'un troisième mode de réalisation, le toit étant en position de transmission ;
- la figure 14 est une vue similaire aux figures 8,12 et 13 du troisième mode de réalisation, le toit étant en position pliée rangée ;
- la figure 15 est une vue similaire à la figure 9 du troisième mode de réalisation ;
- la figure 16 est une vue en coupe selon la ligne XVI-XVI de la figure 15 ;
- la figure 17 est une vue similaire à la figure 3, montrant un mécanisme d'engrenage débrayable ;
- la figure 18 est une vue en coupe selon la droite XVIII-XVIII de la figure 17 du mécanisme d'engrenage en configuration embrayée ; et.
- la figure 19 est une vue similaire à la figure 18, le mécanisme d'engrenage étant en configuration désembrayée.

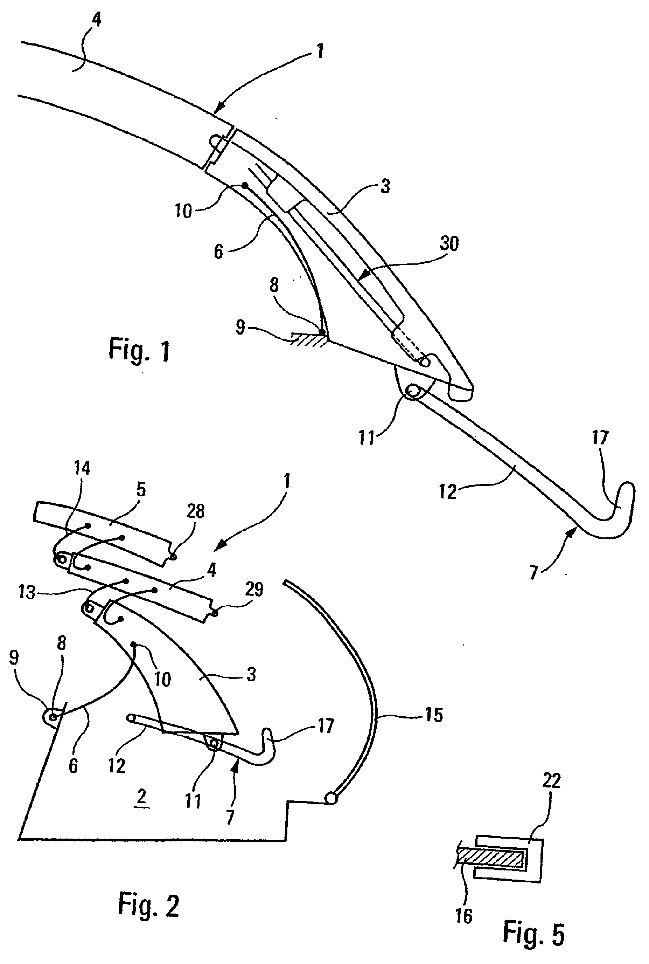

Les figures 1 à 3 montrent un toit 1 pliable de véhicule passant de sa position déployée recouvrant l'habitacle du véhicule à sa position pliée rangée dans laquelle il est rangé dans le coffre arrière 2 du véhicule.

Le toit 1 comporte un élément arrière de toit 3, un élément central de toit 4 et un élément avant de toit 5. Quand le toit 1 est en position déployée, l'élément avant de toit 5 est devant l'élément central de toit 4 qui est lui-même devant l'élément arrière de toit 3. Quand le toit 1 est en position pliée rangée, l'élément avant de toit 5 est dessus l'élément central de toit 4 qui est lui-même dessus l'élément arrière de toit 3, les trois éléments de toit 3,4,5 étant alors en position sensiblement horizontale.

Le pliage (et le dépliage) du toit 1 est commandé par un bras de déploiement 6 et est guidé par un rail de guidage. 7.

Le bras de déploiement 6 comprend une première extrémité par laquelle il est monté de façon pivotante autour d'un axe de rotation 8 avec la carrosserie 9 du véhicule, et une deuxième extrémité par laquelle il est monté de façon pivotante autour d'un axe d'articulation 10 avec l'élément arrière de toit 3.

L'élément arrière de toit 3 comprend un doigt de guidage 11 monté de façon coulissante le long du rail de guidage 7 qui est solidaire de la carrosserie 9 et qui comprend une section de rangement 12 adaptée à guider le toit 1 entre sa position déployée et sa position rangée pliée dans laquelle le toit 1 est escamoté dans le coffre 2.

La section de rangement 12 et le bras de déploiement 6 permettent d'entraîner directement l'élément arrière de toit 3 entre sa position déployée et sa position pliée rangée.

Par ailleurs, l'élément central de toit 4 est relié à l'élément arrière de toit 3 par des bras de liaison arrière 13 qui sont activés par des premiers moyens d'activation. De même, l'élément avant de toit 5 est relié à l'élément central de toit 4 par des bras de liaison avant 14 qui sont activés par des seconds moyens d'activation. Les premiers moyens d'activation et les seconds moyens d'activation ayant leur fonctionnement asservis sur celui du bras de déploiement 6.

L'agencement des bras de liaison arrière 13 et des bras de liaison avant 14, et des moyens d'activation les activant, permettent à l'élément central de toit 4 et à l'élément avant de toit 5 de passer de leur position déployée à leur position pliée rangée dans laquelle le toit 1 est escamoté dans le coffre 2.

Ainsi, le bras de déploiement permet d'entraîner en mouvement, directement ou indirectement, l'ensemble du toit 1 entre sa position déployée et sa position pliée rangée.

La figure 1 représente le toit 1 en position déployée, le doigt de guidage 11 se trouvant à l'extrémité supérieure avant de la section de rangement 12.

La figure 2 représente le toit 1 entre sa position déployée et sa position pliée rangée, le capot 15 du coffre arrière 2 étant dans sa position ouverte de l'avant vers l'arrière pour laisser pénétrer le toit 1 dans le coffre 2.

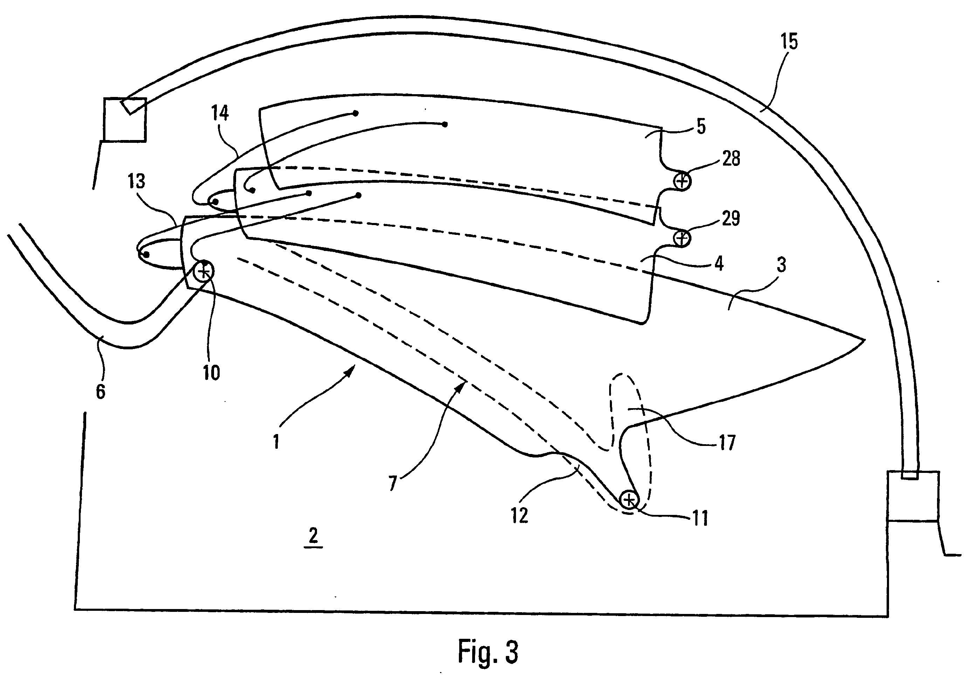

La figure 3 représente le toit 1 dans sa position pliée rangée dans le coffre 2, le capot 15 étant dans sa position fermée et le doigt de guidage 11 se trouvant à l'extrémité inférieure arrière de la section de rangement 12.

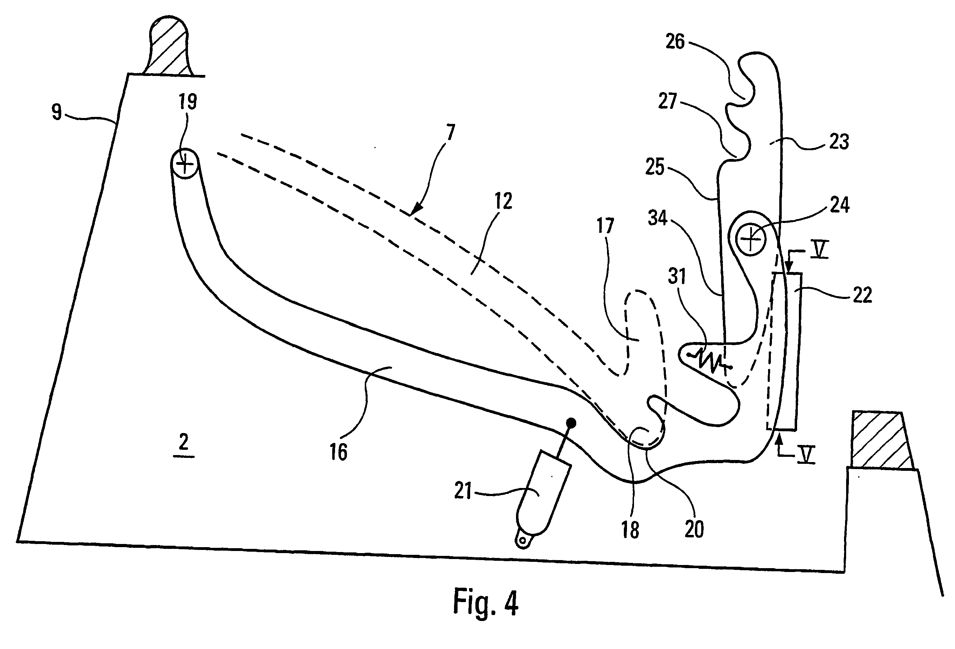

La figure 4 représente un dispositif adapté à faciliter l'introduction d'objets sous le toit 1 en position pliée rangée dans le coffre 2.

Le dispositif comprend un organe de soulèvement 16 qui est monté de façon mobile entre une position basse et une position haute et qui est adapté à entraîner le toit 1 entre sa position pliée rangée et une position pliée surélevée dans laquelle le toit 1 fait partiellement saillie hors du coffre 2, le capot 15 étant alors en position ouverte. L'organe de soulèvement 16 est en position basse quand le toit 1 est dans sa position pliée rangée, et dans sa position haute quand le toit 1 est dans sa position pliée surélevée.

Afin de guider le toit 1 entre sa position pliée rangée et sa position pliée surélevée, le rail de guidage 7 comprend une section de soulèvement 17. Cette section de soulèvement 17 prolonge la section de rangement 12 et comporte une extrémité inférieure avant 18 qui est l'extrémité inférieure arrière de la section de rangement 12 et une extrémité supérieure arrière. L'organe de soulèvement 16 est adapté à entraîner le doigt de guidage 11 le long de la section de soulèvement 17.

Comme on peut le voir à la figure 4, l'organe de soulèvement 16 est un bras de soulèvement 16 qui comprend une première extrémité par laquelle il est monté de façon pivotante, autour d'un axe de pivotement 19 transversal au véhicule, avec la carrosserie 9.

Le bras de soulèvement 16 comprend un élément formant support 20 qui est disposé, quand le bras de soulèvement 16 est en position basse, au droit de l'extrémité inférieure avant 18 de la section de soulèvement 17. Cet élément formant support 20 permet ainsi de supporter et d'entraîner le doigt de guidage 11 le long de la section de soulèvement 17.

Un vérin 21 monté de façon mobile d'une part avec la carrosserie 9, et d'autre part avec le bras de soulèvement 16, permet de faire passer le bras de soulèvement 16 de sa position basse à sa position haute, et le toit 1 plié qui repose sur le bras de soulèvement 16 par l'intermédiaire du doigt de guidage 11 supporté par l'élément formant support 20, de sa position pliée rangée à sa position pliée surélevée.

Du fait du mouvement circulaire de l'élément arrière de toit 3, la section de soulèvement 17 est un arc de cercle ayant pour centre l'axe d'articulation 10.

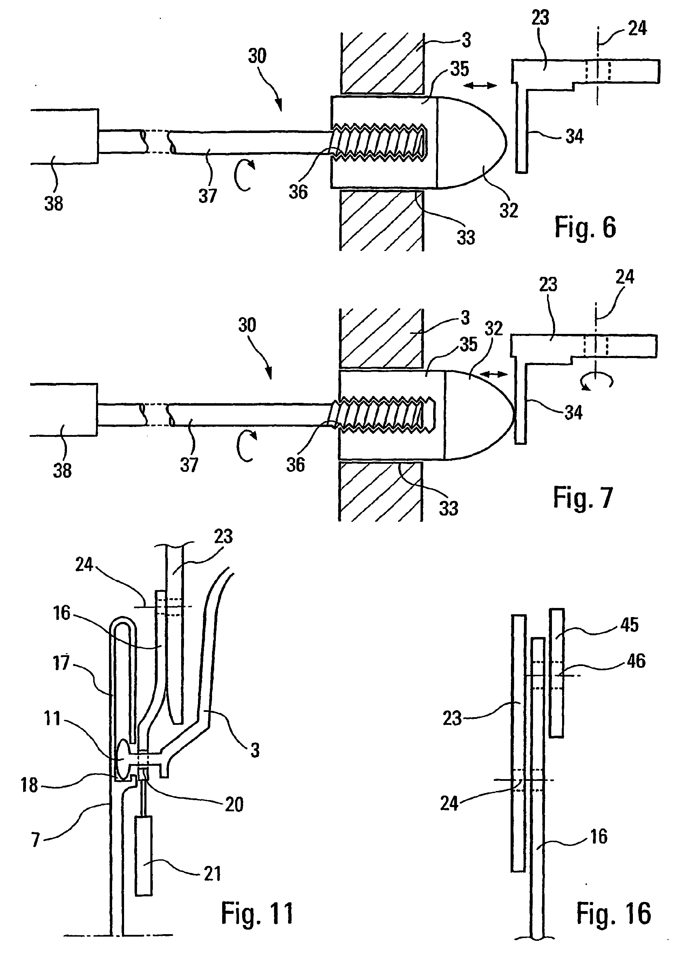

Comme on peut le voir à la figure 5, l'extrémité radiale du bras de soulèvement 17 est guidée par une rainure 22 solidaire de la carrosserie 9 de façon à éviter toute déviation de l'extrémité radiale du bras de soulèvement dans la direction de l'axe de pivotement 19.

Comme on peut le voir à la figure 4, et selon l'invention, un organe de verrouillage 23 est monté sur l'organe de soulèvement 16 de façon mobile entre une position de déverrouillage et une position de verrouillage.

En position de verrouillage, l'organe de verrouillage 23 est adapté à supporter l'élément central de toit 4 et l'élément avant de toit 5 et à les immobiliser par rapport à l'élément arrière de toit 2, et ceci quand le toit 1 plié est entraîné entre sa position pliée rangée et sa position pliée surélevée.

L'organe de verrouillage 23 est situé en arrière et à proximité immédiate de l'élément central de toit 4 et de l'élément avant de toit 5 quand le toit 1 est en position pliée. Plus précisément, l'organe de verrouillage 23 est monté mobile en rotation autour d'un axe de rotation 24 qui est transversal au véhicule et qui est situé sur le bras de soulèvement 16, à proximité de l'extrémité radiale du bras de soulèvement 16 guidée par la rainure 22.

L'organe de verrouillage 23 comprend, sur sa face avant 25 (c'est à dire sur sa face qui fait face aux extrémités arrières de l'élément central de toit 4 et de l'élément avant de toit 5), deux évidements 26,27. L'évidemment 26 est adapté à recevoir, en position de verrouillage, un ergot 28 qui est solidaire de l'élément avant de toit 5, et l'évidemment 27 est adapté à recevoir, en position de verrouillage, un ergot 29 qui est solidaire de l'élément central de toit 4.

Des moyens de commande 30 sont adaptés à entrer en contact avec l'organe de verrouillage 23 et à l'entraîner entre sa position de déverrouillage et sa position de verrouillage. Dans l'exemple illustré aux figures 1 à 11, ces moyens de commande 30 sont adaptés à entraîner l'organe de verrouillage 23 de sa position de déverrouillage vers sa position de verrouillage, des moyens de rappel 31 sollicitant en permanence l'organe de verrouillage 23 vers sa position de déverrouillage.

Comme on peut le voir à la figure 4, les moyens de rappel 31 comprennent un ressort 31 dont une première extrémité est fixée à l'organe de verrouillage 23 et dont la deuxième extrémité est fixée à l'organe de soulèvement 16.

Comme on peut le voir à la figure 1, les moyens de commande 30 sont disposés sur l'élément arrière de toit 3.

Comme on peut le voir aux figures 6 et 7, les moyens de commande 30 comprennent un poussoir 32. Ce poussoir 32 est monté mobile en translation dans un guide 33 qui solidaire de l'élément arrière de toit 3. Le poussoir 32 est mobile entre une position de repos (figure 6) et une position de blocage (figure 7) dans laquelle l'organe de verrouillage 23 est en position de verrouillage.

Pendant son mouvement, de sa position de repos à sa position de blocage, le poussoir 32 passe par une position de contact à partir de laquelle il entre en : contact avec une surface de contact 34 située sur la face avant 25 de l'organe de verrouillage 23. L'axe de rotation 24 étant situé entre la surface de contact 34 et les évidements 26,27, quand le poussoir 32 continue son mouvement, de sa position de contact à sa position de blocage, il entraîne l'organe de verrouillage 23 en rotation autour de l'axe de rotation 24 jusqu'à ce qu'il soit en position de verrouillage dans laquelle les ergots 28,29 sont logés dans les évidements 26,27.

Afin d'actionner le mouvement de translation du poussoir 32 dans le guide 33, un écrou 35, solidaire du poussoir 32, est adapté à coopérer avec une extrémité filetée 36 d'un arbre 37 monté en rotation par rapport à l'élément arrière de toit 3. L'extrémité de l'arbre 37 opposée à l'extrémité filetée 36 est solidaire d'un moteur 38 fixé à l'élément arrière de toit 3, ce qui permet d'entraîner le poussoir 32 en translation selon la direction de l'arbre 37.

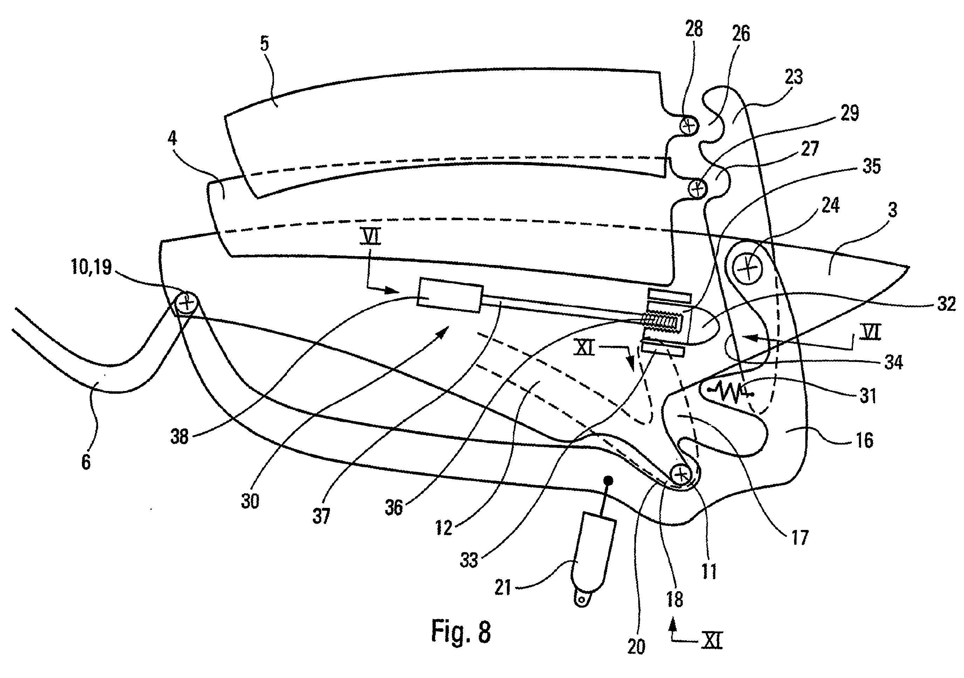

Les figures 8 à 10 illustrent le fonctionnement du dispositif adapté à faciliter l'introduction d'objets sous le toit 1 replié dans le coffre 2 suite à la commande de l'ouverture du capot 15 de l'arrière vers l'avant.

A la figure 8, le toit 1 est dans sa position pliée rangée, le doigt de guidage 11 est dans l'extrémité inférieure avant 18 de la section de soulèvement 17 du rail de guidage 7, le bras de soulèvement 16 est dans sa position basse, l'organe de verrouillage 23 est dans sa position de déverrouillage sous l'action du ressort de rappel 31, et le poussoir 32 est dans sa position de repos.

Dès que le toit est dans sa position pliée rangée, le moteur 38 est activé et entraîne en rotation l'arbre 37. La rotation de l'extrémité fileté 36 de l'arbre 37 entraîne la translation de l'écrou 35 et du poussoir 32, leur rotation étant empêchée par le guide 33. Ainsi, le poussoir 32 passe de sa position de repos à sa position de contact, et à partir de sa position de contact, il entraîne par son mouvement de translation vers sa position de blocage, la rotation de l'organe de verrouillage 23 autour de l'axe de rotation 24, de sa position de déverrouillage à sa position de verrouillage dans laquelle les évidements 26,27 emprisonnent les ergots 28,29.

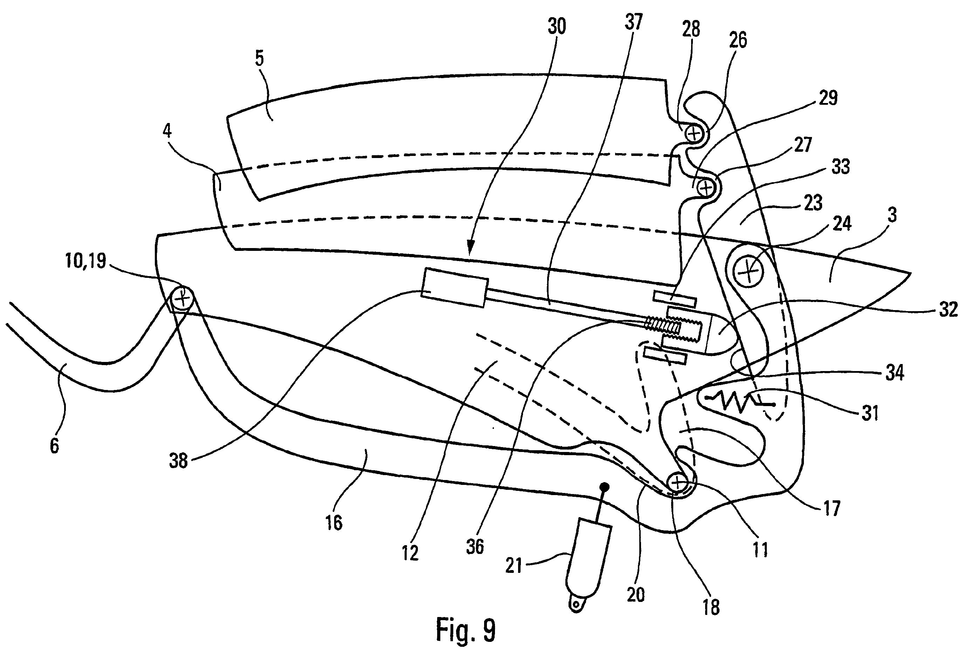

La figure 9 illustre cette étape dans laquelle le toit 1 est dans sa position pliée rangée, le doigt de guidage 11 est dans l'extrémité inférieure avant 18 de la section de soulèvement 17 du rail de guidage 7, le bras de soulèvement 16 est dans sa position basse, l'organe de verrouillage 23 est dans sa position de verrouillage sous l'action du poussoir 32 qui est dans sa position de blocage.

Ainsi, l'élément central de toit 4 et l'élément avant de toit 5 se trouvent fixés dès qu'ils sont rangés dans le coffre arrière 2, ce qui évite tout décalage des éléments supplémentaires de toit 4,5 et leur mise en porte-à-faux suite à une mouvement brusque du véhicule (par exemple passage d'un dos d'âne ou franchissement d'un trottoir).

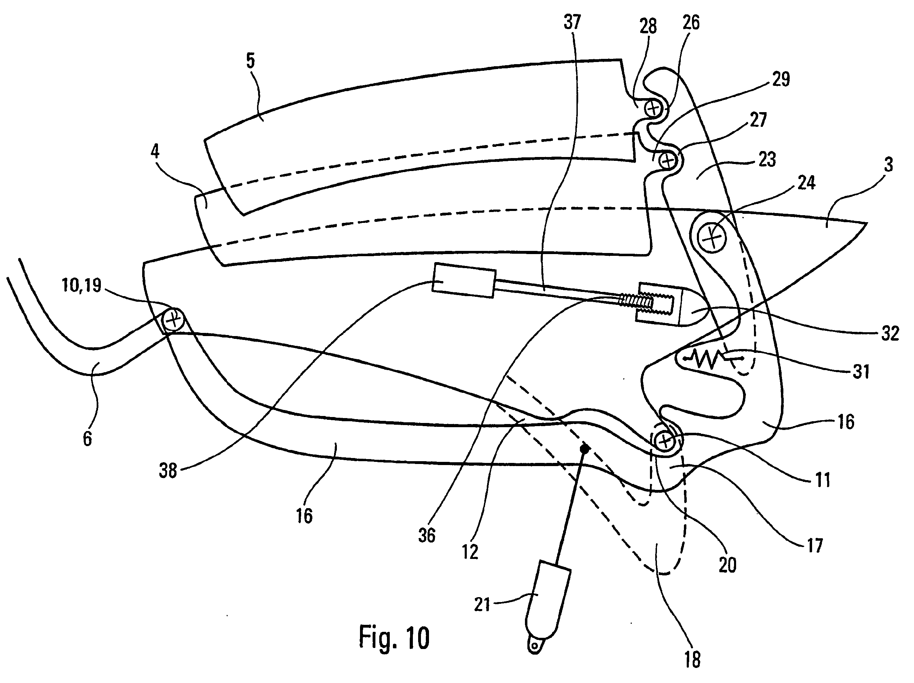

Suite à l'activation de la commande de l'ouverture du capot 15 dans le sens de l'arrière vers l'avant, et afin de rendre accessible la zone du coffre arrière 2 située sous le toit 1 plié, le vérin 21 est activé, ce qui entraîne la rotation du bras de soulèvement 16 autour de l'axe de pivotement 19, de sa position basse à sa position haute. Le doigt de guidage 11, supporté par l'élément formant support 20, coulisse le long de la section de soulèvement 17. Ainsi, le toit 1 passe de sa position pliée rangée à sa position pliée 1 surélevée, comme illustré à la figure 10.

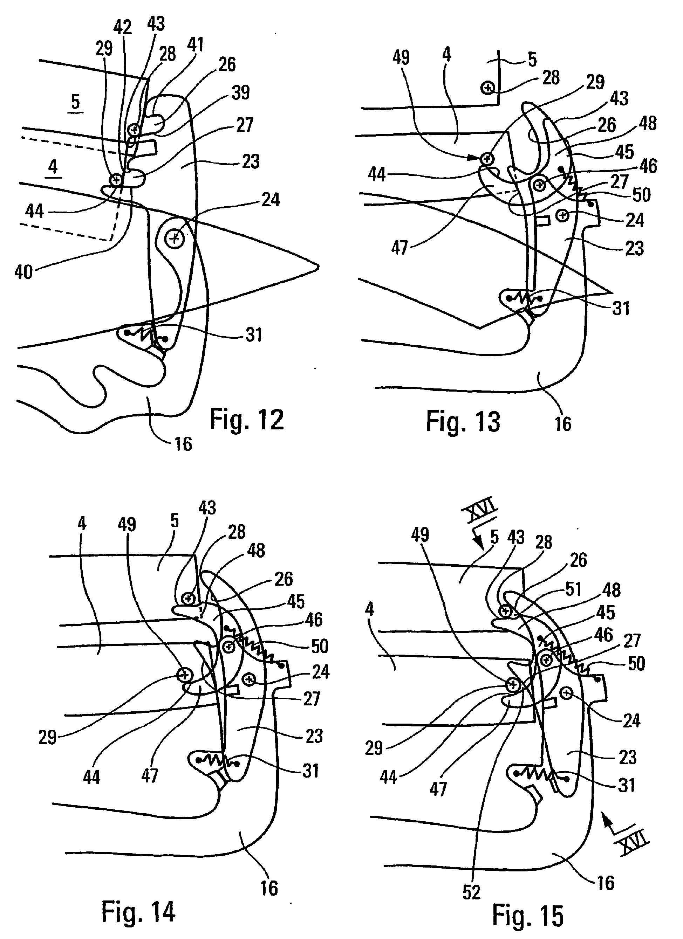

La figure 11 montre le doigt de guidage 11 de l'élément arrière de toit 3 logé dans l'extrémité inférieure avant 18 de la section de soulèvement 17 et supporté par l'élément formant support 20 du bras de soulèvement 16.

Les figures 12 à 16 illustrent deux modes de réalisation particulier le dispositif comprend, pour chaque élément supplémentaire de toit 4,5, une surface d'appui 44,43 qui est adaptée à supporter l'élément supplémentaire de toit 4,5 correspondant quand l'organe de verrouillage 23 est en position de déverrouillage et le toit 1 est en position pliée rangée.

La figure 12 illustre le premier mode de réalisation particulier : l'organe de verrouillage 23 est adapté à supporter l'élément central de toit 4 et l'élément arrière de toit 5 aussi bien quand il est en position de verrouillage qu'en position de déverrouillage.

Chaque évidemment 26,27 de l'organe de verrouillage 23 est délimité par une paroi inférieure 39,40 et une paroi supérieure 41,42 entre lesquelles se loge l'ergot 28,29 correspondant quand l'organe de verrouillage 23 est en position de verrouillage.

Selon ce mode de réalisation, pour chaque évidemment 26,27, la paroi inférieure 39,40 fait saillie vers l'avant au delà de la paroi supérieure 41,42 correspondante de façon à former la surface d'appui 43,44 correspondante : chaque surface d'appui 43,44 est adaptée à recevoir, quand l'organe de verrouillage 23 est en position de déverrouillage et le toit 1 est en position pliée rangée, l'ergot 28,29 qui est adapté à être reçu dans l'évidemment 26,27 correspondant quand l'organe de verrouillage 23 est en position de verrouillage.

Bien évidemment, l'élément central de toit 4 et l'élément avant de toit 5 sont agencés de telle sorte que, quand le toit 1 est proche de sa position pliée rangée, l'ergot 29 de l'élément central de toit 4 est situé plus en avant que l'ergot 28 de l'élément avant de toit 5. De cette façon, l'ergot 29 de l'élément central de toit 4 qui est situé sous l'ergot 28 de l'élément avant de toit 5, ne vient pas en butée contre la surface d'appui 43 adaptée à recevoir l'ergot 28 de l'élément avant de toit 5 lors du pliage du toit 1.

Afin de limiter au maximum le déplacement des éléments central et avant de toit 4,5 par rapport à l'élément arrière de toit 3 quand l'organe de verrouillage 23 passe de sa position de déverrouillage à sa position de verrouillage, les surfaces d'appui 43,44 ont de préférence la forme d'arc de cercle dont le centre est l'axe de rotation 24.

Les figures 13 à 16 illustrent le second mode de réalisation particulier : l'ensemble des surfaces d'appui 43,44 est situé sur un élément d'appui 45.

L'élément d'appui 45 est monté sur l'organe de soulèvement 16 de façon mobile entre une position d'admission (figure 13) et une position de réception (figures 14 et 15) dans laquelle chaque surface d'appui 44,43 est adaptée à supporter l'élément supplémentaire de toit 4,5 correspondant quand le toit 1 est en position pliée rangée.

Comme on peut le voir aux figures 13 à 16, l'élément d'appui 45 est, par rapport à l'organe de soulèvement 16, monté mobile en rotation autour d'un axe de basculement 46 qui est transversal au véhicule et qui est situé en arrière des éléments supplémentaires de toit 4,5 quand le toit 1 est en position pliée.

L'élément d'appui 45 comporte une branche inférieure 47 et une branche supérieure 48 solidaires l'une de l'autre, chacune étant adaptée à former, respectivement, la surface d'appui 44 de l'élément central de toit 4 et celle 43 de l'élément avant de toit 5, quand l'élément d'appui 44 est en position de réception.

Des moyens d'actionnement 49 sont adaptés à entrer en contact avec l'élément d'appui 45 et à l'entraîner de sa position d'admission à sa position de réception. Dans l'exemple illustré aux figures 13 à 15, ces moyens d'actionnement 49 sont adaptés à entraîner l'élément d'appui 45 de sa position d'admission vers sa position de réception, des moyens de retour 50 sollicitant en permanence l'élément d'appui 45 vers sa position d'admission.

Comme on peut le voir à la figure 15, les moyens de retour 50 comprennent un ressort 50 dont une première extrémité est fixée à l'élément d'appui 45 et dont la deuxième extrémité est fixée à l'organe de soulèvement 16.

Dans l'exemple illustré aux figures 13 à 15, les moyens d'actionnement 49 sont constitués par l'ergot 29 de l'élément central de toit 4.

Quand le toit 1 est entraîné de sa position déployée à sa position pliée rangée, il passe par une position de transmission adjacente à sa position pliée rangée et dans laquelle l'ergot 29 entre en contact avec la branche inférieure 47 (figure 13).

Quand le toit 1 est entre sa position déployée et sa position de transmission, l'élément d'appui 45 est en position d'admission sous l'action du ressort 50.

A partir de sa position de transmission, l'ergot 29 de l'élément central de toit 4 entraîne l'élément d'appui 45 jusqu'à sa position de réception dans laquelle le toit 1 est dans sa position pliée rangée.

Quand le toit 1 est en position pliée rangée, l'organe de verrouillage 23 est en position de verrouillage et l'élément d'appui 45 est en position de réception, chaque ergot 28,29 est logé dans une cavité 51,52.

Chaque cavité 51,52 est formée par la surface d'appui 43,44 correspondante de l'élément d'appui 45 et l'évidemment 26,27 correspondant de l'organe de verrouillage 23.

Bien évidemment, l'élément central de toit 4, l'élément avant de toit 5 et l'élément d'appui 45 sont agencés de telle sorte que, quand le toit 1 est proche de sa position de transmission, l'ergot 29 de l'élément central de toit 4 ne vienne pas en butée conte la branche supérieure 48.

Dans le présent exemple, l'élément d'appui 45 est en position d'admission, la branche supérieure 48 est la branche la plus éloignée du toit 1 : elle est orientée principalement vers le haut et faiblement vers l'avant et est située en arrière de la branche inférieure 47 qui est orientée vers le haut et vers l'avant. Ainsi l'ergot 29 de l'élément central de toit 4 ne vient en contact uniquement avec la branche inférieure 47.

Ce mode de réalisation est particulièrement intéressant quand l'élément central de toit 4 et l'élément avant de toit 5 sont agencés de telle sorte que, quand le toit 1 est proche de sa position de transmission, l'ergot 29 de l'élément central de toit 4 est situé plus en arrière que l'ergot 28 de l'élément avant de toit 5. Alors que dans le mode de réalisation illustré à la figure 12, l'ergot 29 de l'élément central de toit 4 viendrait en butée contre la surface d'appui 43 adaptée à recevoir l'ergot 28 de l'élément avant de toit 5, selon le mode de réalisation illustré aux figures 13 à 16, la branche supérieure 48 (formant la surface d'appui 43 adaptée à recevoir l'ergot 28 de l'élément avant de toit 5) est dans une position hors de portée de tout élément du toit 1 (la branche supérieure 48 est située au niveau de l'organe de verrouillage 23 quand il est en position de déverrouillage).

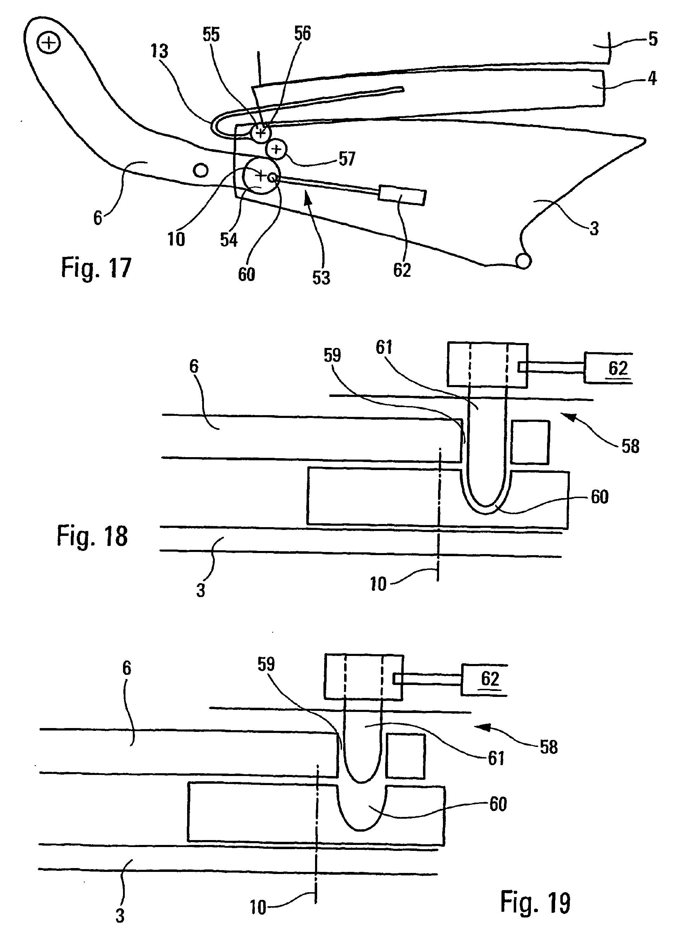

Dans l'exemple illustré aux figures 17 à 19, le premier moyen d'activation est un système d'engrenage 53 reliant le bras de liaison arrière 13 au bras de déploiement 6 de façon à asservir le mouvement de l'élément central de toit 4 au pivotement mouvement de l'élément arrière de toit 3 par rapport au bras de déploiement 6 quand le toit 1 est entraîné par le bras de déploiement 6 entre sa position déployée et sa position pliée rangée.

De façon plus précise, le système d'engrenage 53 comprend un pignon amont 54 qui est fixé à l'extrémité du bras de déploiement 6 et qui est monté rotatif sur l'élément arrière de toit 3 autour d'un axe d'articulation 10, un pignon aval 55 qui est fixé à l'extrémité d'un bras de liaison arrière 13 adjacente à l'élément arrière de toit 3 et qui est monté rotatif sur l'élément arrière de toit 3 autour d'un axe de transmission 56, et un pignon central 57 qui est monté rotatif sur l'élément arrière de toit 3 et qui est engrené avec le pignon amont 54 et le pignon aval 55.

Ainsi, quand le toit 1 est entraîné entre sa position déployée et sa position pliée rangée, le bras de déploiement 6 pivote par rapport à l'élément arrière de toit 3, et en conséquence, le pignon amont 54 entraîne, par l'intermédiaire du pignon central 57, le pignon aval 55 en rotation autour de l'axe de transmission 56 et l'élément central de toit 4 par rapport à l'élément arrière de toit 3.

De façon à éviter le déplacement de l'élément central de toit 4 (et de l'élément avant de toit 5) quand le toit 1 passe de sa position pliée rangée à sa position pliée surélevée causée par la rotation de l'élément arrière de toit 3 autour de l'axe d'articulation 10, un mécanisme de désembrayage 58 est adapté à désembrayé le bras de déploiement 6 du système d'engrenage 53 : l'extrémité du bras de déploiement 6 adjacente à l'axe d'articulation 10 comprend une ouverture 59 et le pignon amont 54 comprend une ouverture complémentaire 60 qui est située au droit de l'ouverture 59 du bras de déploiement 6 quand le toit 1 est en position pliée rangée.

Une goupille 61 est montée mobile dans l'ouverture 59 et l'ouverture complémentaire 60 entre une position d'embrayage et une position de désembrayage.

En position d'embrayage, la goupille 61 pénètre dans l'ouverture 59 et l'ouverture complémentaire 60 de façon à solidariser le pignon amont 54 et le bras de déploiement 6, dans la position de désembrayage, la goupille 61 est sortie de l'ouverture complémentaire 60. La goupille 61 est en position d'embrayage quand le toit 1 est entraîné entre sa position pliée rangée et sa position déployée, et elle est dans sa position de désembrayage quand le toit 1 est entraîné entre sa position pliée rangée et sa position pliée surélevée. La goupille 61 est montée en translation perpendiculairement au véhicule, et elle entraînée par un moteur 62.

Quand le bras de déploiement 6 et le pignon amont 54 sont désolidarisés, le toit 1 peut passer de sa position pliée rangée à sa position pliée surélevée, sans qu'il y ait de contraintes mécaniques dans le système d'engrenage 53.

Par ailleurs, quand le bras de déploiement 6 n'est plus solidarisé au pignon amont 54, le bras de déploiement 6 n'est fixé que par l'axe de rotation 8. Aussi, il est préférable d'avoir un second mécanisme de désembrayage adapté à solidariser le bras de déploiement 6 à la carrosserie 9 par son extrémité adjacente à l'axe d'articulation 10 quand il est désolidarisé du pignon amont 54.

Par ailleurs, afin de ne pas créer de contrainte lors du mouvement du toit 1 entre sa position pliée rangée et sa position pliée surélevée, l'axe d'articulation 10 et l'axe de pivotement 19 sont coaxiaux (quand le toit est dans sa position pliée).

Bien évidemment, l'invention n'est pas limitée au mode de réalisation décrit en détail en liaison avec les figures 1 à 11.

On pourrait par exemple avoir un organe de verrouillage 23 de structure différente, de même des moyens de commande 30 et des moyens de rappel 31.

De même, il serait possible d'avoir un dispositif dans lequel l'axe d'articulation 10 et l'axe de pivotement ne sont pas co-axiaux. A cet effet, pour éviter toute contrainte mécanique, les évidements adaptés à verrouiller les ergots devraient être conformés de façon à donner aux éléments supplémentaires de toit 4,5 une certaine liberté de mouvement par rapport à l'organe de verrouillage 23.

Il serait aussi possible d'avoir des premiers moyens d'activation mécaniquement indépendant du bras de déploiement 6, c'est à dire mécaniquement indépendant : à cet effet, les premiers moyens d'activation pourraient être un moteur. Bien évidemment, l'indépendance des moyens d'activation s'entant mécaniquement parlant, la mise en mouvement de l'élément central de toit 4 par rapport à l'élément arrière de toit 3 dépendant de la mise en mouvement de l'élément arrière de toit 3.

## Revendications

1. Dispositif adapté à faciliter l'introduction d'objets sous un toit (1) plié dans un coffre (2) arrière de véhicule automobile, le toit (1) étant mobile entre une position déployée dans laquelle il recouvre l'habitacle du véhicule, et une position pliée rangée dans laquelle le toit (1) est rangé et escamoté dans le coffre (2), et comportant un élément arrière de toit (3) et au moins un élément supplémentaire de toit (4,5) qui est disposé en avant de l'élément arrière de toit (3) quand le toit (1) est en position déployée, et au-dessus de l'élément arrière de toit (3) quand le toit (1) est en position pliée, l'élément arrière de toit (3) comportant un doigt de guidage (11) adapté à coulisser le long d'un rail de guidage (7) qui est solidaire de la carrosserie (9) du véhicule et qui comprend une section de rangement (12) adaptée à guider le toit (1) entre sa position déployée et sa position pliée rangée, et une section de soulèvement (17) prolongeant la section de rangement (12) et adaptée à guider le toit (1) plié entre sa position pliée rangée et une position pliée surélevée dans laquelle, le capot (15) du coffre (2) étant en position ouverte, le toit (1) plié fait au moins partiellement saillie hors du coffre (2), le dispositif comprenant un organe de soulèvement (16) monté de façon mobile entre une position basse et une position haute, et adapté à entraîner le doigt de guidage (11) le long de la section de soulèvement (17), **caractérisé en ce qu'**un organe de verrouillage (23) est monté sur l'organe de soulèvement (16) de façon mobile entre une position de déverrouillage et une position de verrouillage dans laquelle l'organe de verrouillage (23) est adapté à supporter chaque élément supplémentaire de toit (4,5) et à immobiliser chaque élément supplémentaire de toit (4,5) par rapport à l'élément arrière de toit (3) quand le toit (1) est entraîné entre sa position pliée rangée et sa position pliée surélevée.

2. Dispositif selon la revendication 1, **caractérisé en ce que** l'organe de verrouillage (23) est situé en arrière et à proximité immédiate des éléments supplémentaires de toit (4,5) quand le toit (1) est en position pliée.

3. Dispositif selon la revendication 1 ou 2, **caractérisé en ce que** l'organe de verrouillage (23) est, par rapport à l'organe de soulèvement (16), monté mobile en rotation autour d'un axe de rotation (24) transversal au véhicule et situé en arrière des éléments supplémentaires de toit (4,5) quand le toit (1) est en position pliée.

4. Dispositif selon l'une des revendications 1 à 3, **caractérisé en ce qu'**une rainure (22) solidaire de la carrosserie (9) est adaptée à guider l'extrémité du bras de soulèvement (16) adjacente à l'organe de verrouillage (23).

5. Dispositif selon l'une des revendications 1 à 4, **caractérisé en ce** l'organe de verrouillage (23) comprend, sur sa face avant (25), pour chaque élément supplémentaire de toit (4,5), un évidement (26,27) adapté à recevoir en position de verrouillage un ergot (28,29) solidaire de l'élément supplémentaire de toit correspondant (5,4).

6. Dispositif selon la revendication 5, **caractérisé en ce qu'**il comprend, pour chaque élément supplémentaire de toit (4,5), une surface d'appui (44,43) adaptée à supporter l'élément supplémentaire de toit (4,5) correspondant quand l'organe de verrouillage (23) est en position de déverrouillage et le toit (1) est en position pliée rangée.

7. Dispositif selon la revendication 6, **caractérisé en ce que** chaque évidement (26,27) est délimité par une paroi supérieure (41,42) et par une paroi inférieure (39,40) qui fait saillie vers l'avant au delà de la paroi supérieure (41,42) correspondante et qui forme la surface d'appui (43,44) correspondante.

8. Dispositif selon la revendication 7, les éléments supplémentaires de toit (4,5) étant constitués d'un élément central de toit (4) et d'un élément avant de toit (5) qui est disposé en avant de l'élément central de toit (4) quand le toit (1) est en position déployée, et au-dessus de l'élément central de toit (4) quand le toit (1) est en position pliée, **caractérisé en ce que** les éléments supplémentaires de toit (4,5) sont agencés de telle sorte que, quand le toit (1) est proche de sa position pliée rangée, l'ergot (29) de l'élément central de toit (4) est situé plus en avant que l'ergot (28) de l'élément avant de toit (5) afin de ne pas venir en butée contre la surface d'appui (43) de l'ergot (28) de l'élément avant de toit (5).

9. Dispositif selon la revendication 6, **caractérisé en ce que** l'ensemble des surfaces d'appui (43,44) est situé sur un élément d'appui (45) qui est monté sur l'organe de soulèvement (16) de façon mobile entre une position d'admission et une position de réception dans laquelle chaque surface d'appui (44,43) est adaptée à supporter l'élément supplémentaire de toit (4,5) correspondant quand le toit (1) est en position pliée rangée.

10. Dispositif selon la revendication 9, **caractérisé en ce que** l'élément d'appui (45) est, par rapport à l'organe de soulèvement (16), monté mobile en rotation autour d'un axe de basculement (46) transversal au véhicule et situé en arrière des éléments supplémentaires de toit (4,5) quand le toit (1) est en position pliée.

11. Dispositif selon la revendication 9 ou 10, les éléments supplémentaires de toit (4,5) étant constitués d'un élément central de toit (4) et un élément avant de toit (5) qui est disposé en avant de l'élément central de toit (4) quand le toit (1) est en position déployée, et au-dessus de l'élément central de toit (4) quand le toit (1) est en position pliée, **caractérisé en ce que** l'élément d'appui (45) comporte une branche inférieure (47) et une branche supérieure (48) solidaires l'une de l'autre, chacune étant adaptée à former, respectivement, la surface d'appui (44) de l'élément central de toit (4) et celle (43) de l'élément avant de toit (5), quand l'élément d'appui (45) est en position de réception.

12. Dispositif selon l'une des revendications 9 à 11, **caractérisé en ce que** des moyens d'actionnement (49) sont adaptés à entrer en contact avec l'élément d'appui (45) et à l'entraîner de sa position d'admission à sa position de réception.

13. Dispositif selon la revendication 12, **caractérisé en ce que** les moyens d'actionnement (49) sont constitués par l'ergot (29) de l'élément central de toit (4) qui est adapté à entrer en contact avec la branche inférieure (47) quand l'élément d'appui (45) est en position d'admission et quand le toit (1), en cours de pliage, est dans une position de transmission adjacente à sa position pliée rangée, et à entraîner l'élément d'appui (45) jusqu'à sa position de réception quand le toit (1) passe de sa position de transmission à sa position pliée rangée.

14. Dispositif selon l'une des revendications 9 à 13, **caractérisé en ce que** des moyens de retour (50) sollicitent en permanence l'élément d'appui (45) dans sa position d'admission, les moyens de retour (50) comprenant, par exemple, un ressort (50) dont une première extrémité est fixée à l'élément d'appui (45) et dont la deuxième extrémité est fixée à l'organe de soulèvement (16).

15. Dispositif selon la revendication 9, **caractérisé en ce que**, quand le toit (1) est en position pliée rangée, l'organe de verrouillage (23) est en position de verrouillage et l'élément d'appui (45) est en position de réception, chaque ergot (28,29) est logé dans une cavité (51,52) formée par la surface d'appui (43,44) correspondante de l'élément d'appui (45) et l'évidement (26,27) correspondant de l'organe de verrouillage (23).

16. Dispositif selon l'une des revendications 1 à 15, **caractérisé en ce que** des moyens de commande (30) sont adaptés à entrer en contact avec l'organe de verrouillage (23) et à l'entraîner de sa position de déverrouillage à sa position de verrouillage.

17. Dispositif selon la revendication 16, **caractérisé en ce que** les moyens de commande (30) sont disposés sur l'élément arrière de toit (3).

18. Dispositif selon la revendication 17 dépendante de la revendication 5, **caractérisé en ce que** les moyens de commande (30) comprennent un poussoir (32) monté mobile en translation dans un guide (33) solidaire de l'élément arrière de toit (3), entre une position de repos et une position de blocage dans laquelle l'organe de verrouillage (23) est en position de verrouillage, et adapté à entrer en contact avec une surface de contact (34) située sur la face avant (25) de l'organe de verrouillage (23).

19. Dispositif selon la revendication 18 dépendante de la revendication 3, **caractérisé en ce que** l'axe de rotation (24) est situé entre la surface de contact (34) et les évidements (26,27).

20. Dispositif selon la revendication 18 ou 19, **caractérisé en ce qu'**un écrou (35), solidaire du poussoir (32), est adapté à coopérer avec l'extrémité filetée (36) d'un arbre (37) monté en rotation de façon à entraîner le poussoir (32) en translation selon la direction de l'arbre (37).

21. Dispositif selon la revendication 20, **caractérisé en ce que** l'extrémité de l'arbre (37) opposée à l'extrémité filetée (36) est solidaire d'un moteur (38) fixé à l'élément arrière de toit (3).

22. Dispositif selon l'une des revendications 1 à 21, **caractérisé en ce que** des moyens de rappel (31) sollicitent en permanence l'organe de verrouillage (23) dans sa position de déverrouillage, les moyens de rappel (31) comprenant, par exemple, un ressort (31) dont une première extrémité est fixée à l'organe de verrouillage (23) et dont la deuxième extrémité est fixée à l'organe de soulèvement (16).

23. Dispositif selon l'une des revendications 1 à 22, **caractérisé en ce que** le bras de déploiement (6) est relié au bras de liaison arrière (13) articulant l'élément arrière de toit (3) à l'élément supplémentaire adjacent de toit (4), par l'intermédiaire d'un système d'engrenage (53), et **en ce qu'**un mécanisme de désembrayage (58) est adapté à désembrayé le bras de déploiement (6) du système d'engrenage (53).

24. Dispositif selon la revendication 23, **caractérisé en ce que** le système d'engrenage (53) comprend un pignon amont (54) qui est fixé à l'extrémité du bras de déploiement (6) et qui est monté rotatif sur l'élément arrière de toit (3) autour d'un axe d'articulation (10), un pignon aval (55) qui est fixé à l'extrémité d'un bras de liaison arrière (13) par lequel l'élément arrière de toit (3) est articulé avec l'élément supplémentaire de toit (4) lui étant adjacent, et qui est monté rotatif sur l'élément arrière de toit (3) autour d'un axe de transmission (56), et un pignon central (57) qui est monté rotatif sur l'élément arrière de toit (3) et qui est engrené avec le pignon amont (54) et le pignon aval (55).

25. Dispositif selon la revendication 24, **caractérisé en ce que** l'extrémité du bras de déploiement (6) adjacente à l'axe d'articulation (10) comprend une ouverture (59) et le pignon amont (54) comprend une ouverture complémentaire (60) qui est située au droit de l'ouverture (59) quand le toit (1) est en position pliée rangée.

26. Dispositif selon la revendication 25, **caractérisé en ce qu'**une goupille (61) est montée mobile dans l'ouverture et l'ouverture complémentaire entre une position d'embrayage dans laquelle elle pénètre dans l'ouverture (59) et l'ouverture complémentaire (60) de façon à solidariser le pignon amont (54) et le bras de déploiement (6) quand le toit (1) est entraîné entre sa position déployée et sa position pliée rangée, et une position de désembrayage de façon à désolidariser le pignon amont (54) du bras de déploiement (6) quand le toit (1) est entraîné entre sa position pliée rangée à sa position pliée surélevée.

27. Dispositif selon la revendication 26, **caractérisé en ce que** la goupille (61), entraînée par un moteur (62), est montée en translation perpendiculairement au véhicule.

28. Dispositif selon l'une des revendications 1 à 27, **caractérisé en ce que** l'axe d'articulation (10) autour duquel l'élément arrière de toit (3) est monté mobile avec le bras de déploiement (6) entraînant le toit (1) entre sa position déployée et sa position pliée et l'axe de pivotement (19) autour duquel l'organe de soulèvement (16) est monté mobile avec la carrosserie (9) sont coaxiaux quand le toit (1) est dans sa position pliée.

## Patentansprüche

1. Vorrichtung zum Erleichtern der Einführung von Gegenständen unter ein in einen heckseitigen Kofferraum (2) eines Kraftfahrzeugs gefaltetes Dach (1), wobei das Dach (1) zwischen einer entfalteten Position, in welcher dieses das Karosseriegehäuse des Fahrzeugs abdeckt, und einer ordentlich gefalteten Position, in welcher das Dach (1) in dem Kofferraum (2) angeordnet und versenkt ist, bewegbar ist, und mit einem Heck- Dachelement (3) und wenigstens einem Zusatz- Dachelement (4, 5), welches vor dem Heck- Dachelement (3) angeordnet ist, wenn sich das Dach (1) in einer entfalteten Position befindet, und unterhalb des Heck- Dachelements (3), wenn sich das Dach (1) in einer gefalteten Position befindet, wobei das Heck-Dachelement (3) einen Führungsstift (11) aufweist, der so ausgebildet ist, dass sich dieser entlang einer Führungsschiene (7) verschieben kann, die mit der Karosserie (9) des Fahrzeugs fest verbunden ist und die einen Lagerabschnitt (12) aufweist, der so ausgebildet ist, dass dieser das Dach (1) zwischen seiner entfalteten Position und seiner ordentlich gefalteten Position führen kann, und einen Hebeabschnitt (17), der den Lagerabschnitt (12) verlängert und so ausgebildet ist, dass dieser das gefaltete Dach (1) zwischen seiner ordentlich gefalteten Position und einer hochliegenden gefalteten Position, in welcher das gefaltete Dach (1) bei offenern Deckel (15) des Kofferraums (2) wenigstens teilweise aus dem Kofferraum (2) vorsteht, führt, wobei die Vorrichtung ein Hebeelement (16) aufweist, das beweglich zwischen einer tiefen Position und einer hohen Position montiert ist und so ausgebildet ist, dass dieses den Führungsstift (11) entlang des Hebeabschnitts (17) bewegt, **dadurch gekennzeichnet, dass** ein Riegelelement (23) auf dem Hebeelement (16) beweglich zwischen einer Entriegelungsposition und einer Verriegelungsposition montiert ist, in welcher das Riegelelement (23) jedes Zusatz- Dachelement (4, 5) abstützen und jedes Zusatz- Dachelement (4, 5) gegenüber dem Heck- Dachelement (3) festsetzen kann, wenn das Dach (1) zwischen seiner ordentlich gefalteten Position und seiner hochliegenden, gefalteten Position bewegt wird.

2. Vorrichtung nach Anspruch 1, **dadurch gekennzeichnet, dass** das Riegelelement (23) hinter und in unmittelbarer Nähe zu den Zusatz- Dachelementen (4, 5) liegt, wenn sich das Dach (1) in der gefalteten Position befindet.

3. Vorrichtung nach Anspruch 1 oder 2, **dadurch gekennzeichnet, dass** das Riegelelement (23) in Bezug auf das Hebeelement (16) drehbeweglich um eine Drehachse (24) quer zum Fahrzeug montiert ist und hinter den Zusatz- Dachelementen (4, 5) liegt, wenn sich das Dach (1) in der gefalteten Position befindet.

4. Vorrichtung nach einem der Ansprüche 1 bis 3, **dadurch gekennzeichnet, dass** eine mit der Karosserie (9) einstückige Nut (22) dazu ausgebildet ist, das Ende des Hebearms (16) angrenzend an das Riegelelement (23) zu führen.

5. Vorrichtung nach einem der Ansprüche 1 bis 4, **dadurch gekennzeichnet, dass** das Riegelelement (23) auf seiner Vorderseite (25) für jedes Zusatz- Dachelement (4, 5) eine Vertiefung (26, 27) aufweist, die so ausgebildet ist, dass sie in der Riegelposition eine mit dem korrespondierenden Zusatz- Dachelement (4, 5) fest verbundene Nase (28, 29) aufzunehmen.

6. Vorrichtung nach Anspruch 5, **dadurch gekennzeichnet, dass** diese für jedes Zusatz- Dachelement (4, 5) eine Anschlagfläche (43, 44) aufweist, die so ausgebildet ist, dass diese das korrespondierende Zusatz- Dachelement (4, 5) abstützt, wenn sich das Riegelelement (23) in der Entriegelungsposition befindet und sich das Dach (1) in der ordentlich gefalteten Position befindet.

7. Vorrichtung nach Anspruch 6, **dadurch gekennzeichnet, dass** jede Vertiefung (26, 27) durch eine obere Wand (41, 42) und durch eine untere Wand (39, 40), die nach vorne über die korrespondierende obere Wand (41, 42) hinaus vorsteht und die korrespondierende Anschlagfläche (43, 44) bildet, begrenzt ist.

8. Vorrichtung nach Anspruch 7, wobei die Zusatz- Dachelemente (4, 5) aus einem zentralen Dachelement (4) und einem Vorder- Dachelement (5) gebildet werden, das vor dem Zentral- Dachelement (4) angeordnet ist, wenn sich das Dach (1) in einer entfalteten Position befindet, und oberhalb des Zentral- Dachelements (4) angeordnet ist, wenn sich das Dach (1) in der gefalteten Position befindet, **dadurch gekennzeichnet, dass** die Zusatz- Dachelemente (4, 5) derart angeordnet sind, dass, wenn sich das Dach (1) nahe seiner ordentlich gefalteten Position befindet, die Nase (29) des Zentral- Dachelements (4) weiter als die Nase (28) des Vorder- Dachelements (5) vorne liegt, um nicht gegen die Anschlagfläche (43) der Nase (28) des Vorder- Dachelements (5) in Anlage zu kommen.

9. Vorrichtung nach Anspruch 6, **dadurch gekennzeichnet, dass** die Gesamtheit der Anschlagflächen (43, 44) auf einem Anschlagelement (45) angeordnet ist, das auf dem Hebeelement (16), beweglich zwischen einer Aufnahmeposition und einer Empfangsposition montiert ist, in welcher jeder Anschlagfläche (44, 43) so ausgebildet ist, dass sie das korrespondierende Zusatz- Dachelement (4, 5) abstützt, wenn sich das Dach (1) in der ordentlich gefalteten Position befindet.

10. Vorrichtung nach Anspruch 9, **dadurch gekennzeichnet, dass** das Anschlagelement (45) in Bezug zum Hebeelement (16) drehbeweglich um eine Schwenkachse (46) quer zum Fahrzeug montiert ist und hinter den Zusatz- Dachelementen (4, 5) liegt, wenn sich das Dach (1) in der gefalteten Position befindet.

11. Vorrichtung nach Anspruch 9 oder 10, wobei die Zusatz- Dachelemente (4, 5) aus seinem Zentral- Dachelement (4) und einem Vorder- Dachelement (5) gebildet werden, das vor dem Zentral- Dachelement (4) angeordnet ist, wenn sich das Dach (1) in der entfalteten Position befindet, und oberhalb des Zentral- Dachelements (4) angeordnet ist, wenn sich das Dach (1) in der gefalteten Position befindet, **dadurch gekennzeichnet, dass** das Anschlagelement (45) einen unteren Zweig (47) und einen oberen Zweig (48) umfasst, die fest miteinander verbunden sind, wobei jeder so ausgebildet ist, dass dieser jeweils die Anschlagfläche (44) des Zentral- Dachelements (4) und die (43) des Vorder- Dachelements (5) bildet, wenn sich das Anschlagelement (45) in der Empfangsposition befindet.

12. Vorrichtung nach einem der Ansprüche 9 bis 11, **dadurch gekennzeichnet**, das Wirkelemente (49) so ausgebildet sind, dass sie mit dem Anschlagelement (45) in Kontakt treten und dieses aus seiner Annahmeposition in seine Empfangsposition bewegen.

13. Vorrichtung nach Anspruch 12, **dadurch gekennzeichnet, dass** die Wirkelemente (49) durch die Nase (29) des Zentral- Dachelements (4) gebildet sind, welches so ausgebildet ist, dass sie mit dem unteren Zweig (47) in Kontakt kommen, wenn sich das Anschlagelement (45) in der Annahmeposition befindet und wenn sich das Dach (1) im Verlauf der Faltung in einer Übergangsposition angrenzend an seine ordentlich gefalteten Position befindet und es das Anschlagelement (45) bis in seine Empfangsposition bewegt, wenn das Dach (1) aus seiner Übergangsposition in seine ordentlich gefaltete Position gelangt.

14. Vorrichtung nach einem der Ansprüche 9 bis 13, **dadurch gekennzeichnet, dass** Rückstellmittel (50) das Anschlagelement (45) dauerhaft in seiner Annahmeposition belasten, wobei die Rückstellmittel (50) zum Beispiel eine Feder (50) umfassen, von der ein erstes Ende an dem Anschlagelement (45) fixiert ist und von der das zweite Ende am Hebeelement (60) fixiert ist.

15. Vorrichtung nach Anspruch 9, **dadurch gekennzeichnet, dass**, wenn sich das Dach (1) in der ordentlich gefalteten Position befindet, sich das Riegelelement (23) in der Riegelposition befindet und sich das Anschlagelement (45) in der Empfangsposition befindet, jede Nase (28, 29) in einem Hohlraum (41, 52) sitzt, der durch die korrespondierende Anschlagfläche (43, 44) des Anschlagelements (45) und der korrespondierenden Vertiefung (26, 27) des Riegelelements (23) gebildet wird.

16. Vorrichtung nach einem Ansprüche 1 bis 15, **dadurch gekennzeichnet, dass** Steuermittel (30) so ausgebildet sind, dass sie mit dem Riegelelement (23) in Kontakt gelangen und dieses aus seiner Entriegelungsposition in seine Verriegelungsposition bewegen.

17. Vorrichtung nach Anspruch 16, **dadurch gekennzeichnet, dass** die Steuermittel (30) auf dem Heck- Dachelement (3) angeordnet sind.

18. Vorrichtung nach Anspruch 17 in Abhängigkeit von Anspruch 5, **dadurch gekennzeichnet, dass** die Steuermittel (30) einen Drücker (32) umfassen, der in einer mit dem Heck- Dachelement (3) festverbundenen Führung (33) zwischen einer Ruheposition und einer Blockierposition, in welcher sich das Riegelelement (23) in der Verriegelungsposition befindet, translatorisch beweglich montiert ist und so ausgebildet ist, dass dieser mit einer Kontaktfläche (34) in Kontakt gelangt, die auf der Vorderseite (25) des Riegelelements (23) liegt.

19. Vorrichtung nach Anspruch 18 in Abhängigkeit von Anspruch 3, **dadurch gekennzeichnet, dass** die Drehachse (24) zwischen der Kontaktfläche (34) und den Vertiefungen (26, 27) liegt.

20. Vorrichtung nach Anspruch 18 oder 19, **dadurch gekennzeichnet, dass** eine Nase (35), die mit dem Drücker (32) fest verbunden ist, so ausgebildet ist, dass sie mit dem schraubbaren Ende (36) einer drehbar montiert Welle (37) derart zusammenwirkt, dass sie den Drücker (32) translatorisch in Richtung der Welle (37) bewegt.

21. Vorrichtung nach Anspruch 20, **dadurch gekennzeichnet, dass** das dem Schraubende (36) entgegengesetzte Ende der Welle (37) fest mit einem Motor (38) verbunden ist, der an dem Heck- Dachelement (3) fixiert ist.

22. Vorrichtung nach einem der Ansprüche 1 bis 21, **dadurch gekennzeichnet, dass** Rückholmittel (31) das Riegelelement (23) in seiner Entriegelungsposition dauerhaft belasten, wobei die Rückholmittel (31) zum Beispiel eine Feder (31) umfassen, von der ein erstes Ende an dem Riegelelement (23) fixiert ist und von der das zweite Ende an dem Hebeelement (16) fixiert ist

23. Vorrichtung nach einem der Ansprüche 1 bis 22, **dadurch gekennzeichnet, dass** der Entfaltungsarm (6) mit dem Heck- Verbindungsarm (13) verbunden ist und das Heck- Dachelement (3) gelenkig mit dem angrenzenden Zusatz- Dachelement (4) mit Hilfe eines Getriebesystems (53) verbindet, und dass ein Entkupplungsmechanismus (28) so ausgebildet ist, dass dieser den Entfaltungsarm (6) des Getriebesystems (53) auskuppeln kann.

24. Vorrichtung nach Anspruch 23, **dadurch gekennzeichnet, dass** das Getriebesystem (53) ein stromaufwärts liegendes Zahnrad (54) umfasst, das an dem Ende des Entfaltungsarms (6) fixiert ist und das auf dem Heck- Dachelement (3) drehbar um eine Gelenkachse (10) montiert ist, und ein stromabwärts liegendes Zahnrad (5) umfasst, das an dem Ende eines Heck- Verbindungsarms (13) fixiert ist, durch welchen das Heck- Dachelement (3) mit dem Zusatz- Dachelement (4), das diesem nahe liegt; gelenkig verbunden ist, und das auf dem Heck- Dachelement (3) um eine Übertragungsachse (56) drehbar montiert ist, und ein zentrales Zahnrad (57) umfasst, das auf dem Heck- Dachelement (3) drehbar montiert ist und das mit dem stromaufwärts liegenden Zahnrad (54) und dem stromabwärts liegenden Zahnrad (55) in Eingriff steht.

25. Vorrichtung nach Anspruch 24, **dadurch gekennzeichnet, dass** das Ende des an die Gelenkachse (10) angrenzenden Entfaltungsarms (6) eine Öffnung (59) umfasst und das stromaufwärts liegende Zahnrad (54) eine komplementäre Öffnung (60) umfasst, die mit der Öffnung (59) fluchtet, wenn sich das Dach (1) in der ordentlich gefalteten Position befindet.

26. Vorrichtung nach Anspruch 25, **dadurch gekennzeichnet, dass** ein Splint (61) beweglich in der Öffnung und der komplementären Öffnung zwischen einer Kupplungsposition, in welcher dieser in die Öffnung (59) und die komplementäre Öffnung (60) derart eindringt, dass das stromaufwärts liegende Zahnrad (54) und der Entfaltungsarm (6) festgesetzt sind, wenn das Dach (1) zwischen seiner entfalteten Position und seiner ordentlich gefalteten Position bewegt wird, und einer Entkupplungsposition zum Lösen des stromaufwärts liegenden Zahnrads (54) des Entfaltungsarms (6), wenn das Dach (1) zwischen seiner ordentlich gefalteten Position und seiner höher liegenden Faltposition bewegt wird, beweglich montiert ist.

27. Vorrichtung nach Anspruch 26, **dadurch gekennzeichnet, dass** der durch einen Motor (62) bewegte Splint (61) translatorisch senkrecht zum Fahrzeug montiert ist.

28. Vorrichtung nach einem der Ansprüche 1 bis 27, **dadurch gekennzeichnet, dass** die Gelenkachse (10), um welche das Heck- Dachelement (3) beweglich zu dem Entfaltungsarm (6) angeordnet ist und welche das Dach (1) zwischen seiner Entfaltungsposition und seiner Faltposition bewegt, und die Schwenkachse (19), um welche das Hebeelement (16) beweglich zu der Karosserie (9) angeordnet ist, koaxial ausgerichtet sind, wenn sich das Dach (1) in seiner Faltposition befindet.

## Claims

1. A device adapted to facilitate the insertion of objects under a folded roof (1) in the rear boot (2) of a motor vehicle, the roof (1) being movable between a deployed position in which it covers the passenger compartment of the vehicle, and a folded, stored position in which the roof (1) is stored and retracted into the boot (2), and comprising a rear roof element (3) and at least one additional roof element (4, 5) which is located in front of the rear roof element (3) when the roof (1) is in the deployed position, and above the rear roof element (3) when the roof (1) is in the folded position, the rear roof element (3) having a guiding finger (11) adapted to slide along a guide rail (7) which is firmly fixed to the body (9) of the vehicle and which comprises a storage section (12) adapted to guide the roof (1) between its deployed position and its folded, stored position, and a raising section (17) which is an extension of the storage section (12) and is adapted to guide the folded roof (1) between its folded, stored position and a folded, raised position in which, the lid (15) of the boot (2) being in the open position, the folded roof (1) projects at least partly from the boot. (2), the device comprising a raising member (16) mounted so as to be movable between a low position and a high position, and adapted to carry the guiding finger (11) along the raising section (17), **characterized in that** a locking component (23) is mounted on the raising member (16) in such a way as to be movable between an unlocked position and a locked position in which the locking component (23) is adapted to support each additional roof element (4, 5) and to immobilize each additional roof element (4, 5) in relation to the rear roof element (3) when the roof (1) is carried along between its folded, stored position and its raised, folded position.

2. A device according to Claim 1, **characterized in that** the locking component (23) is located behind, and in the immediate vicinity of, the additional roof elements (4, 5) when the roof (1) is in the folded position.

3. A device according to Claim 1 or 2, **characterized in that** the locking component (23) is mounted, in relation to the raising member (16), in such a way as to be rotatable about an axis of rotation (24) transverse to the vehicle and is located to the rear of the additional roof elements (4, 5) when the roof (1) is in the folded position.

4. A device according to one of Claims 1 to 3, **characterized in that** a groove (22) which is integral with the vehicle body (9) is adapted to guide that end of the raising arm (16) which is adjacent to the locking component (23).

5. A device according to one of Claims 1 to 4, **characterized in that** this locking component (23) has, on its front face (25) and for each additional roof element (4, 5), a recess (26, 27) adapted to receive, in the locking position, a lug (28, 29) which is integral with the corresponding additional roof element (5, 4).

6. A device according to Claim 5, **characterized in that** it comprises, for each additional roof element (4, 5), a bearing surface (44, 43) adapted to support the corresponding additional roof element (4, 5) when the locking component (23) is in the unlocked position and the roof (1) is in the folded, stored position.

7. A device according to Claim 6, **characterized in that** each recess (26, 27) is delimited by an upper wall (41, 42), and by a lower wall (39, 40) which projects forward beyond the corresponding upper wall (41, 42) and forms the corresponding bearing surface (43, 44).

8. A device according to Claim 7, the additional roof elements (4, 5) consisting of a central roof element (4) and a front roof element (5) which is located in front of the central roof element (4) when the roof (1) is in the deployed position, and above the central roof element (4) when the roof (1) is in the folded position, **characterized in that** the additional roof elements (4, 5) are arranged so that, when the roof (1) is close to its folded, stored position, the lug (29) of the central roof element (4) is located further forward than the lug (28) of the front roof element (5) so as not to come to rest against the bearing surface (43) provided for the lug (28) of the front roof element (5).

9. A device according to Claim 6, **characterized in that** all the bearing surfaces (43, 44) are located on a support element (45) which is mounted on the raising member (16) in such a way as to be movable between an admission or intake position and a receiving position in which each bearing surface (44, 43) is adapted to support the corresponding additional roof element (4, 5) when the roof (1) is in the folded, stored position.

10. A device according to Claim 9, **characterized in that** the support element (45) is mounted, in relation to the raising member (16), in such a way as to be rotatable about a pivot axis (46) transverse to the vehicle and is located to the rear of the additional roof elements (4, 5) when the roof (1) is in the folded position.

11. A device according to Claim 9 or 10, the additional roof elements (4, 5) consisting of a central roof element (4) and a front roof element (5) which is disposed in front of the central roof element (4) when the roof (1) is in the deployed position, and above the central roof element (4) when the roof (1) is in the folded position, **characterized in that** the support element (45) comprises a lower portion (47) and an upper portion (48) which are integral with one another, each being adapted to form, respectively, the bearing surface (44) for the central roof element (4) and the bearing surface (43) for the front roof element (5), when the support element (45) is in the receiving position.

12. A device according to one of Claims 9 to 11, **characterized in that** actuating means (49) are adapted to come into contact with the support element (45) and carry it from its admission position into its receiving position.

13. A device according to Claim 12, **characterized in that** the actuating means (49) consist of the lug (29) of the central roof element (4) which is adapted to come into contact with the lower portion (47) of the support element (45) when the latter is in the admission position and when the roof (1), during the folding procedure, is in a transmission position adjacent to its folded, stored position, and to carry the support element (45) into its receiving position when the roof (1) moves from its transmission position into its folded, stored position.

14. A device according to one of Claims 9 to 13, **characterized in that** return means (50) constantly urge the support element (45) into its admission position, the return means (50) comprising, for example, a spring (50) of which a first end is fixed to the support element (45) and the second end is fixed to the raising member (16).

15. A device according to Claim 9, **characterized in that**, when the roof (1) is in the folded, stored position, the locking component (23) is in the locked position and the support element (45) is in the receiving position, each lug (28, 29) is accommodated in a cavity (51, 52) formed by the corresponding bearing surface (43, 44) of the support element (45) and the corresponding recess (26, 27) of the locking component (23).

16. A device according to one of Claims 1 to 15, **characterized in that** control means (30) are adapted to come into contact with the locking component (23) and to carry it from its unlocked position into its locked position.

17. A device according to Claim 16, **characterized in that** the control means (30) are disposed on the rear roof element (3).

18. A device according to Claim 17 dependent on Claim 5, **characterized in that** the control means (30) include a push-button (32), mounted in such a way as to be translationally movable in a guide (33) which is integral with the rear roof element (3), between a resting position and an immobilizing position in which the locking component (23) is in the locked position, and adapted to come into contact with a contact surface (34) located on the front face (25) of the locking component (23).

19. A device according to Claim 18 dependent on Claim 3, **characterized in that** the axis of rotation (24) is located between the contact surface (34) and the recesses (26, 27).

20. A device according to Claim 18 or 19, **characterized in that** a nut (35), firmly attached to the push-button (32), is adapted to cooperate with the threaded end (36) of a rotary-mounted shaft (37) in such a way that the push-button (32) undergoes a translational movement according to the direction of the shaft (37).

21. A device according to Claim 20, **characterized in that** the end of the shaft (37) opposite the threaded end (36) is firmly attached to a motor (38) fixed to the rear roof element (3).

22. A device according to one of Claims 1 to 21, **characterized in that** return means (31) constantly urge the locking component (23) into its unlocked position, the return means (31) comprising, for example, a spring (31) of which a first end is fixed to the locking component (23) and the second end is fixed to the raising member (16).

23. A device according to one of Claims 1 to 22, **characterized in that** the deployment arm (6) is connected to the rear link arm (13) linking the rear roof element (3) to the adjacent additional roof element (4), through the intermediary of a gear system (53), and **in that** a disengaging mechanism (58) is adapted to disengage the deployment arm (6) from the gear system (53).

24. A device according to Claim 23, **characterized in that** the gear system (53) comprises an upper pinion (54) which is fixed to the end of the deployment arm (6) and which is rotary mounted on the rear roof element (3) about an axis of articulation (10), a lower pinion (55) which is fixed to the end of a rear link arm (13) by which the rear roof element (3) is linked to the additional roof element (4) adjacent to it, and which is rotary mounted on the rear roof element (3) about an axis of transmission (56), and a central pinion (57) which is rotary mounted on the rear roof element (3) and which meshes with the upper pinion (54) and the lower pinion (55).

25. A device according to Claim 24, **characterized in that** the end of the deployment arm (6) adjacent to the axis of articulation (10) has an opening (59) and the upper pinion (54) has a complementary opening (60) which is located at right angles to the opening (59) when the roof (1) is in the folded, stored position.

26. A device according to Claim 25, **characterized in that** a pin (61) is fitted in such a way that it can move in the opening and the complementary opening between an engaged position in which it is inserted into the opening (59) and the complementary opening (60) so as to secure the upper pinion (54) to the deployment arm (6) when the roof (1) is carried along between its deployed position and its folded, stored position, and a disengaged position so as to release the upper pinion (54) from the deployment arm (6) when the roof (1) is carried along between its folded, stored position and its folded, raised position.

27. A device according to Claim 26, **characterized in that** the pin (61), driven by a motor (62), is mounted for translational movement perpendicular to the vehicle.

28. A device according to one of Claims 1 to 27, **characterized in that** the axis of articulation (10) about which the rear roof element (3) is movably mounted on the deployment arm (6) carrying the roof (1) between its deployed position and its folded position and the swivel axis (19) about which the raising member (16) is movably mounted on the vehicle body (9) are coaxial when the roof (1) is in its folded position.
